# EUROPÄISCHE PATENTSCHRIFT

(11) **EP 1 289 702 B1**
(45) Veröffentlichungstag und Bekanntmachung des Hinweises auf die Patenterteilung: **25.03.2009**
(21) Anmeldenummer: 01940553.9
(22) Anmeldetag: 08.06.2001
(51) Int. Cl.: B23C 5/12

(54) **VERFAHREN ZUM FRÄSEN VON TANNENBAUMNUTEN**
METHOD FOR MILLING FISHBONE-TYPE NOTCHES
PROCEDE POUR LE FRAISAGE D'ENCOCHES EN ARETE DE POISSON

(30) Priorität: 13.06.2000 EP 00112530
(43) Veröffentlichungstag der Anmeldung: 12.03.2003
(73) Patentinhaber: SIEMENS AKTIENGESELLSCHAFT, 80333 München (DE)
(72) Erfinder: KÜRZEL, Hubertus, 02785 Olbersdorf (DE)
(86) Internationale Anmeldenummer: PCT/EP2001/006501
(87) Internationale Veröffentlichungsnummer: WO 2001/096055

(56) Entgegenhaltungen:
- DD-A- 236 228
- DE-A- 19 855 045
- DE-C- 19 607 230
- US-A- 5 676 505

## Beschreibung

Die Erfindung bezieht sich auf ein Verfahren zum Fräsen von Tannenbaumnuten auf dem Umfang einer Turbinenwelle zur Aufnahme von Schaufelfüßen, bei dem eine sich in radialer Eindringrichtung flankenseitig abgetreppt verjüngende Vorform des Nutenquerschnittes vorgefräst wird, aus welcher Vorform der wesentliche Teil der durch Hinterschneidungen in den Stufenflanken charakterisierten Tannenbaum-Querschnittsform in einem Werkzeugdurchlauf mittels eines Profilfräsers ausgefräst wird.

Eine axiale Tannenbaumverbindung wird vorwiegend im Gas- und Dampfturbinenbau für die Fixierung von im Wesentlichen axial eingeschobenen Turbinenschaufeln verwendet, um im Betrieb auf die Schaufeln durch Fliehkräfte einwirkende Ruhebeanspruchungen optimal aufzunehmen. Diese Fliehkräfte wirken sich als statische und dynamische Biegekräfte aus. Die Schaufelbefestigung mittels sogenannter Tannenbaumnuten überträgt die Kräfte gestaffelt über mehrere Zahnpaare. Soweit solche für die Schaufelbefestigung verwendete Tannenbaumnuten nicht gebogen sondern gerade sind, lassen sie sich am einfachsten durch Räumen herstellen.

Nachteilig ist bei geraden Tannenbaumnuten aber die ungünstige Einleitung der Kräfte und Momente von der überstehenden Austrittskante des Profils in den Schaufelfuß und die vergleichsweise kompliziert zu verwirklichende Übereinstimmung der Schwerpunkte des Schaufelblattes und des Schaufelfußes auf einem Radienstrahl. Hier schafft die Befestigung des Schaufelfußes in kreisbogenförmigen Tannenbaumnuten eine geeignete Abhilfe, insbesondere aufgrund der Annäherung der Kreisbogenform an die Schaufelform. Die problemlose Herstellung derart gebogener Tannenbaumnuten erfordert herkömmlich indessen spezielle Fräsmaschinen ("Turbomaschinen im Kraftwerk" von Prof. Dipl.-Ing. Gerhard Schilg, VEB Verlag Technik Berlin, 1. Auflage 1978; S. 247ff).

Aus der deutschen Patentschrift DE 196 07 230 C1 ist bereits ein Verfahren und eine Vorrichtung zum Fräsen von Tannbaumnuten in Turbinenwellen bekannt, bei welchem ein Glockenfräser in das Werkstück eintaucht und senkrecht zur Eintauchrichtung verfährt, um die Hinterschneidungen des Profils fertig zu bearbeiten. Diese Anordnung hat den Nachteil, dass die hohen Schnittkräfte des großen Glockenfräsers eine sehr leistungsstarke Fräsmaschine benötigten und dementsprechend die Turbinenwelle zeitaufwendig auf einer entsprechenden Fräsmaschine aufgespannt werden muss.

Der Erfindung liegt die Aufgabe zugrunde, ein Verfahren zum Herstellen solcher Tannenbaumnuten zu schaffen, welches dazu keine speziellen Fräsmaschinen benötigt, sondern mittels eines auf eine herkömmliche Turbinenläufer-Drehmaschine aufgesattelten Fräsaggregates durchführbar ist.

Die Aufgabe wird erfindungsgemäß gelöst durch die Merkmale des Anspruchs 1. Dazu wird zunächst in vorzugsweise drei Bearbeitungsstufen eine abgetreppt verjüngte Vorform des Nutenquerschnittes vorgefräst. Aus dieser Vorform wird der wesentliche Teil der durch Hinterschneidungen in den Stufenflanken charakterisierten Tannenbaum-Querschnittsform in einem einzigen Werkzeugdurchlauf mittels eines Profilfräsers ausgefräst. Dadurch lassen sich insbesondere gebogene Tannenbaumnuten in effektiver Weise bewerkstelligen.

Das Verfahren ermöglicht in besonders vorteilhafter Art und Weise, dass einerseits die für den Fräsvorgang erforderliche Belastung innerhalb der Leistungsfähigkeit eines solchen Fräsaggregates liegt. Andererseits wird das große Spanvolumen bewältigt, das beim Fräsen der als Fußverhakungen ausgeformten Hinterschneidungen in die Stufenflanken einer Vorform des Tannenbaumquerschnittes anfällt. Das stellt hohe Anforderungen an die Leistungsfähigkeit des Fräsaggregates, wenn die Formgebung weitgehend in einem Arbeitsgang erfolgen soll. Zur Beherrschung des großen Spanvolumens werden bisher in mehreren Arbeitsgängen unterschiedliche Werkzeuge eingesetzt, deren Schneiden jedoch in unerwünschter Weise aufgrund des Verschleißes häufig nachgeschliffen werden müssen.

Nachfolgend werden Ausführungsbeispiele der Erfindung anhand von Zeichnungen näher erläutert. Darin zeigen:
- FIG 1: in schematisierter Form die Abfolge des Fräsens zu- nächst einer Vorform des Nutenquerschnittes, aus wel- cher dann in einem einzigen Werkzeugdurchlauf die Tannenbaum-Querschnittsform mittels eines speziell gestalteten Profilfräsers ausgefräst wird,
- FIG 2: eine schematische Darstellung des Ergebnisses der nach FIG 1 durchlaufenen Verfahrensstufen,
- FIG 3: eine Seitenansicht des für die im wesentlichen letzte Frässtufe eingesetzten Profilfräsers,
- FIG 4: eine Frontansicht des Profilfräsers nach FIG 3 in Blickrichtung des dortigen Richtungspfeiles IV,
- FIG 5: eine Querschnittsansicht des Profilfräsers in der Schnittebene V-V von FIG 3,
- FIG 6: eine Querschnittsdarstellung analog FIG 5 entspre- chend der Schnittebene VI-VI in FIG 3, und
- FIG 7: eine Querschnittsdarstellung analog FIG 5 und 6 ent- sprechend der Schnittlinie VII-VII in FIG 3.

Einander entsprechende Teile sind in allen Figuren mit den gleichen Bezugszeichen versehen.

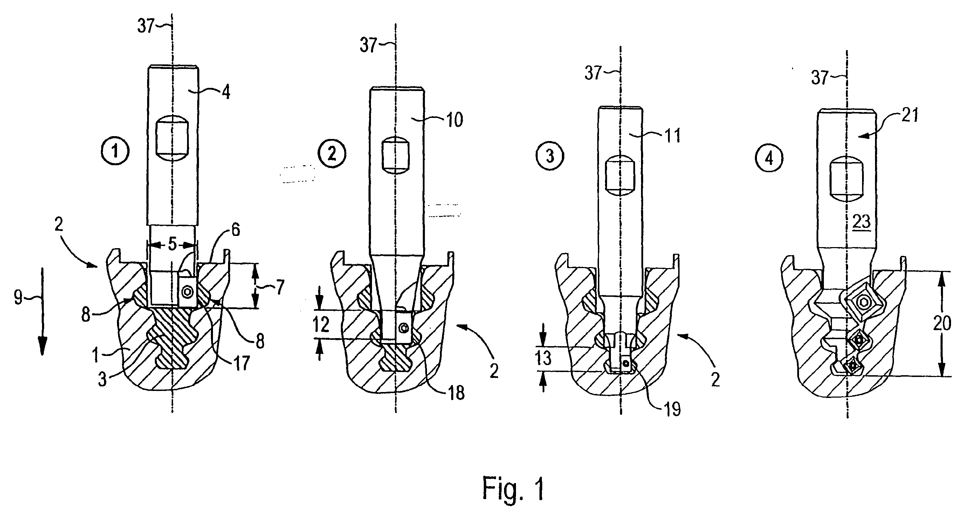

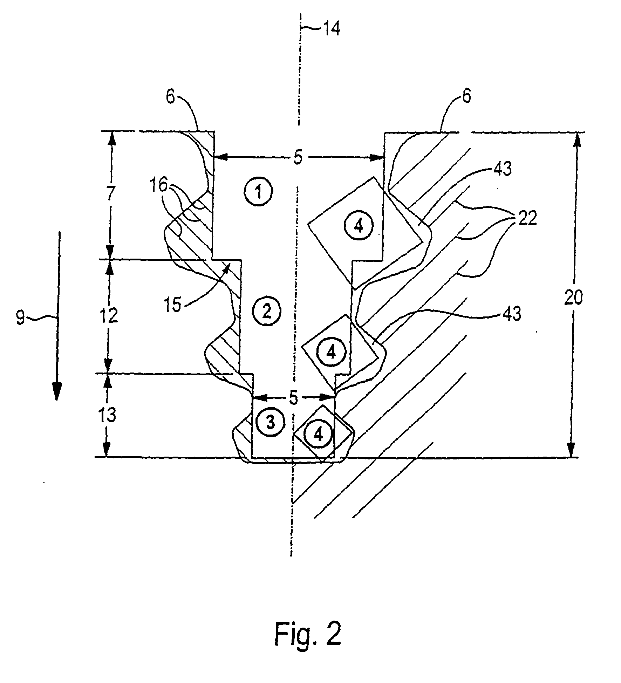

In den Umfangsbereich 1 einer mit ihrer Längsachse etwa lotrecht zur Bildebene der FIG 1 und FIG 2 verlaufenden Turbinenwelle 2 soll eine Tannenbaumnut 3 eingefräst werden, deren endgültige Querschnittsform in FIG 1 mit vergrößerter Strichstärke schraffiert ist. Dieses Fräsen erfolgt schrittweise zunächst zur Herstellung einer sich in radialer Eindringrichtung 9 abgetreppt verjüngenden Vorform des Nutenquerschnittes in drei durch eingekreiste Bezifferungen verdeutlichten Verfahrensstufen (1)-(3). In der Verfahrensstufe (1) fräst ein Schaftfräser 4 von vergleichsweise großem Wirkdurchmesser 5 ausgehend von einem vorgefertigten Auflagebereich 6 für den Schaufelfuß - bezogen auf die Achse der Turbinenwelle - nach innen über eine Eintauchtiefe 7. Damit wird im äußeren Umfangsbereich 1 zunächst eine Vorform für die später auszufräsenden, beiderseits äußeren Fußverhakungen 8 der Tannenbaumnut 3 geschaffen.

Die in radialer Eintauchrichtung 9 fölgenden, mittels der Schaftfräser 10 und 11 vorgenommenen weiteren Fräsvorgänge für die Herstellung der vollständigen Vorform 15 des Tannenbaumquerschnittes schließt sich in den durch eingekreiste Bezifferungen verdeutlichten Verfahrensstufen (2) und (3) an. Dabei formt in der Verfahrensstufe (2) von FIG 1 der Schaftfräser 10 den Eintauchbereich 12 und der Schaftfräser 11 einen Eintauchbereich 13 mit kleinerem Innendurchmesser 14. Das mit den drei Fräsoperationen (1) bis (3) geschaffene Zwischenergebnis ist eine sich in radialer Eintauchrichtung 9 dreistufig abgetreppt verjüngende Vorform 15 der Tannenbaumnut 3. Der Querschnitt dieser sich in radialer Eintauchrichtung 9 ausgehend von dem Auflagebereich 6 für den Schaufelfuß abgetreppt verjüngenden Vorform 15 der Tannenbaumnut 3 ist in FIG 2 auf der linken Seite der Symmetrieachse 14 dargestellt. Dieser Querschnitt ist in FIG 2, linker Teil durch eine von links oben nach rechts unten verlaufende Schraffierung 16 verdeutlicht.

Die mit unterschiedlichem Wirkdurchmesser 5 versehenen Schaftfräser 4,10 und 11 tragen in ihrem fräsend wirksamen Umfangsbereich Hartmetallschneiden 17,18,19, welche Teil jeweils einer Hartmetall(HM)-Schneidplatte, insbesondere einer Wendeschneidplatte, sind.

In einer nachfolgenden Verfahrensstufe (4) (FIG 1,2) wird aus der Vorform 15 der wesentliche Teil der Tannenbaum-Querschnittsform 3 über die gesamte Eintauchtiefe 20 des Profilfräsers 21 in einem Werkzeugdurchlauf ausgefräst. Der Flankenbereich 43 der endgültigen Querschnittsform der Tannenbaumnut 3 ist in FIG 2 rechts von der Symmetrieachse 14 und links von den Schraffurlinien 22 verdeutlicht.

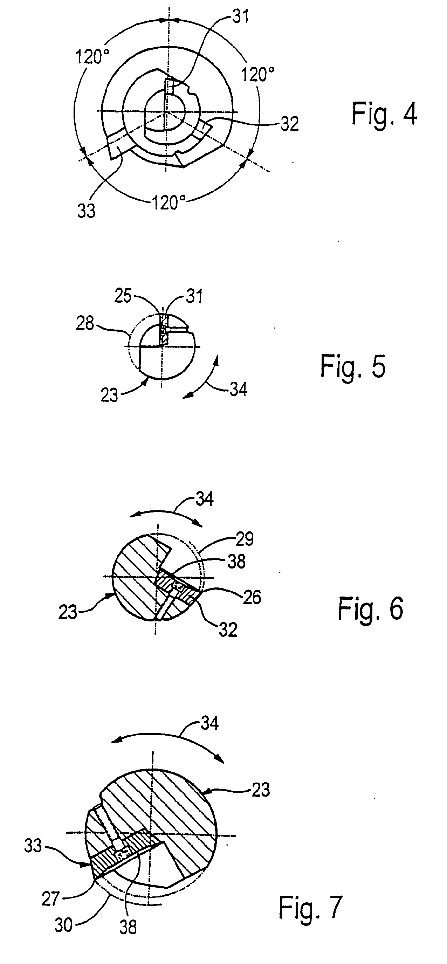

Der folgende Teil der Figurenbeschreibung befasst sich mit der konstruktiven Ausgestaltung des Profilfräsers 21 zur weitgehenden Endformung der Tannenbaumnut 3 aus der Vorform 15 in einer Verfahrensstufe (4). Der Fräsergrundkörper 23 des Profilfräsers 21 ist umfangsseitig mit einer Anzahl von in Axialrichtung 24 des Fräsergrundkörpers 23 versetzt angeordneten und radial zur Fräserdrehachse 37 vorstehenden Schneidspitzen 25,26,27 bestückt, die hinsichtlich ihrer Wirkdurchmesser 28,29,30 (FIG 5 bis 7) abgestuft sind. Jede Schneidspitze 25 bis 27 ist Teil einer auswechselbar am Fräsergrundkörper 23 fixierten Hartmetall(HM)-Schneidplatte 31,32 bzw. 33. Die Schneidplatten 31 bis 33 sind Wendeschneidplatten. Jedem Wirkdurchmesser 28 bis 30 ist auf dem Umfang des Fräsergrundkörpers 23 nur eine Schneidplatte 31 bis 33 zugeordnet. Eine jede Wendeschneidplatte 31 bis 33 steht mit ihrer Schneidspitze 25 bis 27 umfangsseitig über den sie tragenden Schaftbereich des Fräsergrundkörpers 23 hinaus.

Ein bedeutsames Merkmal wird darin gesehen, dass mit unterschiedlichen Wirkdurchmessern 28 bis 30 ausgestattete Schneidplatten 31 bis 33 in Umfangsrichtung 34 zueinander am Fräsergrundkörper 23 versetzt sind. Sie sind um jeweils 120° gegeneinander versetzt (FIG 5 bis 7). Dieser in Umfangsrichtung zur Fräserdrehachse 37 vorliegende Versatz in der Positionierung der Schneidplatten 31 bis 33 vergleichmäßigt das Arbeiten des Profilfräsers 21. Die auf seinem Umfang jeweils einzeln positionierten Schneidplatten 31,32,33 treffen nicht jeweils gleichzeitig auf die Flanken der Vorform 15 der Tannenbaumnut 3 auf. Das geschieht vielmehr mit zeitlichem Abstand hintereinander. Dadurch werden Belastungsspitzen vermieden und die dem Fräsantrieb abverlangte maximale Antriebsleistung 21 wird reduziert.

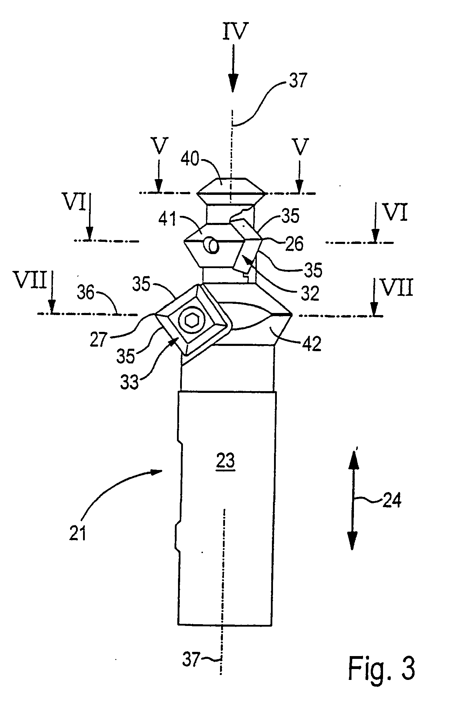

Die die Schneidspitzen 25-27 zwischen sich einschließenden Schneiden 35 bilden etwa einen rechten Winkel miteinander, wie das besonders deutlich an der Form der Schneidplatte 33 in FIG 3 erkennbar ist. Die Winkelhalbierende 36 (FIG 3) zwischen den beiden Schneiden 35 einer Schneidspitze 25-27 bildet dabei etwa einen rechten Winkel mit der Fräserdrehachse 37.

Die Wendeplatten 31 bis 33 weisen eine quadratische Umrißform auf. Die durch die Schneiden 35 gebildeten Quadratseiten sind die Plattendeckflächen und die jeweils außenliegende Plattendeckfläche bildet bzw. enthält die Spanfläche einer Schneide 35.

Jede Schneidplatte 31 bis 33 ist eine Lochwendeplatte mit einem zentrischen Befestigungsloch, dessen Lochachse etwa senkrecht zu den Plattendeckflächen 38 der Wendeplatte 31 bis 33 ausgerichtet ist.

Am Umfang des Fräsergrundkörpers 23 sind jeweils nach Art etwa eines Kreisbogensegmentes ausgeformte Wülste 40,41,42 zur Aufnahme und zum Unterbau der Schneidplatten 31 bis 33 ausgebildet.

Mittels des Profilfräsers 21 wird die Endform des Tannenbaumquerschnittes (FIG 2, rechter Teil) in vorteilhaft zeitsparender Art und Weise in weitgehend einem Werkzeugdurchlauf aus der Vorform 15 ausgefräst. Soweit das noch nicht vollständig der Fall sein kann, wird die Endform mit gesonderten Fräswerkzeugen in weiteren Durchläufen hergestellt. Das erfordert dann aber nur noch ein geringfügiges Zerspanungsvolumen mit geringer Leistungsbeanspruchung des Fräsaggregates und mit entsprechend geringem Werkzeugverschleiß.

## Patentansprüche

1. Verfahren zum Fräsen von Tannenbaumnuten (3) auf dem Umfang einer Turbinenwelle(2) zur Aufnahme von Schaufelfüßen, bei dem eine sich in radialer Eindringrichtung (9) flankenseitig abgetreppt verjüngende Vorform (15) des Nutenquerschnittes (3) vorgefräst wird, aus welcher Vorform(15) der wesentliche Teil der durch Hinterschneidungen in den Stufenflanken charakterisierten Tannenbaum-Querschnittsform (3) in einem Werkzeugdurchlauf mittels eines Profilfräsers (21) ausgefräst wird,
**dadurch gekennzeichnet, dass**
die Vorform (15) in mehreren Bearbeitungsstufen, insbesondere in drei Stufen, durch mit Hartmetall(HM)-Schneiden (17-19) bestückte Schaftfräser (4,10,11) gefräst wird.

## Claims

1. Method for milling fir-tree grooves (3) on the circumference of a turbine shaft (2) for receiving blade roots, in which a preform (15) of the groove cross section (3), which tapers in stepped form in the radial penetration direction (9), on the flank sides, is premilled, and the main part of the fir-tree cross-sectional shape (3), which is **characterized by** undercuts in the step flanks, is milled out of this preform (15) in one tool pass by means of a profile milling cutter (21), **characterized in that** the preform (15) is milled in a plurality of machining stages, in particular in three stages, by end mill cutters (4, 10, 11) which are provided with carbide cutting edges (17-19).

## Revendications

1. Procédé pour le fraisage d'encoches en arête de poisson (3) sur le pourtour d'un arbre de turbine (2) pour le logement d'emplantures d'aubes, dans lequel une préforme (15), se rétrécissant en forme d'escalier côté flanc dans le sens d'introduction (9) radial, de la section d'encoche (3) est pré-fraisée, préforme (15) à partir de laquelle la partie essentielle de la forme de section en arête de poisson (3) **caractérisée par** des contre-dépouilles dans les flancs étagés est fraisée dans un passage d'outil au moyen d'une fraise à profiler (21),
**caractérisé en ce que**
la préforme (15) est fraisée en plusieurs étapes d'usinage, en particulier en trois étapes, par des fraises à queue (4, 10, 11) équipées de tranchants (17-19) en métal dur (HM).
